Europäisches Patentamt

European Patent Office

Office européen des brevets

(11) Veröffentlichungsnummer: **0 284 913 B1**

(19)

(12) **EUROPÄISCHE PATENTSCHRIFT**

(45) Veröffentlichungstag der Patentschrift: **26.05.93**

(21) Anmeldenummer: **88104303.8**

(22) Anmeldetag: **18.03.88**

(51) Int. Cl.5: **G11B 5/60**, G11B 5/455, G11B 5/64, G11B 5/82, G11B 23/00

(54) Magnetaufzeichnungsträger zu Testzwecken, insbesondere zur Eichung von Flug-Magnetköpfen.

(30) Priorität: **28.03.87 DE 8704667 U**

(43) Veröffentlichungstag der Anmeldung:
**05.10.88 Patentblatt 88/40**

(45) Bekanntmachung des Hinweises auf die
Patenterteilung:
**26.05.93 Patentblatt 93/21**

(84) Benannte Vertragsstaaten:
**DE FR GB NL**

(56) Entgegenhaltungen:
**EP-A- 0 179 299**
**US-A- 3 122 727**

**IEEE TRANSACTIONS ON MAGNETICS, Bd.
mag23, Nr. 5, September 1987, NEW
YORK,US;Seiten 3456 - 3458; OHKUBU et al:
"Accurate measurement and evaluation of
dynamic characteristics of flying head slider
for large capacity fast access magnetic disk
storage"**

**PATENT ABSTRACTS OF JAPAN, Bd. 7, Nr.
228 (P-228)(1373),8. Oktober 1983;& JP-**

**A-58115627**

**PATENT ABSTRACTS OF JAPAN, Bd. 4, Nr.
107 (P-21)(589),31. Juli 1980;& JP-
A-5564629**

(73) Patentinhaber: **BASF Aktiengesellschaft
Carl-Bosch-Strasse 38
W-6700 Ludwigshafen(DE)**

(72) Erfinder: **Bickert, Waltraud
Londoner Ring 9
W-6700 Ludwigshafen(DE)**
Erfinder: **Brunkhorst, Heide
Albrecht-Duerer-Ring 35 b
W-6710 Frankenthal(DE)**
Erfinder: **Gergely, Istvan, Dr.
Seckenheimer Strasse 54
W-6803 Edingen-Neckarhausen(DE)**
Erfinder: **Oetzel, Wolfgang
Lange Gewann 21 a
W-6720 Speyer(DE)**

## Beschreibung

Die Erfindung betrifft einen Aufzeichnungsträger zu Testzwecken, zur Eichung von Flug–Magnetköpfen, bestehend aus einem nicht flexiblen Substrat, wobei zumindest eine stufenförmige Erhebung im Aufzeichnungsbereich des Aufzeichnungsträgers vorgesehen ist und die Erhebung aus hartem Material besteht, und Testsystem dafür.

Eine bekannte Methode zur Prüfung von Fest–Magnetplatten auf ihre Tauglichkeit zur Verwendung mit Flug–Magnetköpfen besteht darin, einen dem Nutzkopf möglichst originaltreuen mit Piezoelement versehenen Magnetkopf über den gesamten Aufzeichnungsbereich der Platte fliegen zu lassen und die dabei auftretenden Beschleunigungen zu messen und zu registrieren. Die Verwendung von Original–Datenplatten ist wegen der Veränderlichkeit der Magnetsignale bzw. Piezosignale durch Klima, Staub oder den Prüfvorgang selbst nicht empfehlenswert. Eine Klassifizierung von Datenplatten nach unterschiedlichen Signalamplituden scheitert zunächst an der sehr unterschiedlichen Empfindlichkeit der erwähnten, sog. Gleittestköpfe. Um diese Unterschiede zu messen und elektronisch ausgleichen zu können, werden Referenzplatten mit konstanten Beschleunigungssignalwerten benötigt.

Die Möglichkeit Gleittestköpfe auf einem Simulationsteststand (einem sog. Shaker) zu erregen und die Systemantwort bis ca. 15 KHZ gegenüber einer Sinus– bzw. Stoßerregung zu messen ist nachteilig, da die zum Teil stark unterschiedlichen Flug–Eigenschaften der Köpfe dabei unberücksichtigt bleiben.

Es ist ein solcher Magnetaufzeichnungsträger zu Prüfzwecken von Platten bzw. Köpfen bereits im Handel, wobei die Magnetschicht eine Phosphor–Nickel–Schicht ist und eine schmale Stufenerhebung längs eines Radius über den Aufzeichnungsbereich der Platte angeordnet ist. Die Stufenerhebung besteht aus Titan und besitzt abgerundete Endkanten. Im praktischen Gebrauch ist diese Platte nachteilig und ergibt insbesondere im HF–Analysierbereich liegende Signale, deren Signalhöhe bewertbar ist.

Mit der JP–A 64 629 ist ein Aufzeichnungsträger nach dem Oberbegriff des Anspruchs 1 bekannt. Es handelt sich um eine Glasplatte mit ausschließlich radialiegenden Erhebungen unterschiedlicher Höhe zur Messung der Flughöhe eines Magnetkopfes.

Es ist Aufgabe der vorliegenden Erfindung einen Aufzeichnungsträger zu Prüfzwecken für die oben genannten Anwendungsbereiche zu verbessern.

Die Aufgabe wird mit einem Aufzeichnungsträger zu Testzwecken zur Eichung von Flug–Magnetköpfen, bestehend aus einem nicht flexiblen Substrat, wobei zumindest eine stufenförmige Erhebung im Aufzeichnungsbereich des Aufzeichnungsträgers vorgesehen ist und die Erhebung aus hartem Material besteht, dadurch gelöst, daß

- wenigstens eine Magnetschicht aufgebracht ist,
- die stufenförmige Erhebung eine Kreisbogenform, –stufe ist und auf der Magnetschichtfläche vorgesehen ist,
- die Enden der stufenförmigen Erhebung radial angeordnet und senkrecht zur Drehrichtung des Aufzeichnungsträgers scharfkantig ausgebildet sind und
- die stufenförmige Erhebung eine Höhe im Bereich von 0,30 – 0,70 $\mu$m besitzt.

Damit wurde eine gute Signalauflösung bei schonendem und weitgehend unhörbarem Kopf–Stufen–Kontakt erreicht.

Die Bogenform der stufenförmigen Erhebung hat besonders die Vorteile, daß im NF–Analysierbereich reproduzierbare Analogsignale erhalten werden. Dabei erzeugen beide Stufenkanten vergleichbare Signale mit vorherbestimmter, definierter Form.

Besonders zweckmäßig ist der erfindungsgemäße Magnetaufzeichnungsträger wenn er als Fest–Magnetplatte, z.B. als sog. Winchester–Magnetplatte, ausgebildet ist.

Grundsätzlich kann der Aufzeichnungsträger jedoch jede beliebige Form aufweisen, da in jedem Fall ein zentrisches Aufspannen zum Drehvorgang und eine Benutzung mit einem geeigneten Meßkopf möglich ist. Zweckmäßig ist die stufenförmige Erhebung (im folgenden als "die Bogenstufe" bezeichnet) etwa in der Mitte des Aufzeichnungsbereichs des Aufzeichnungsträgers, vorzugsweise zur Mitte, insbesondere zur Mittelöffnung des Aufzeichnungsträgers hin versetzt, angeordnet, da im inneren Drittel der Kopf am niedrigsten über der Platte fliegt und daher das Meßsignal am größten ist. Damit können zumindest annähernd Durchschnittsmeßwerte über den Plattenradius erhalten werden, und es können auch die angrenzenden, ungestörten Flugbereiche zum Vergleich gemessen werden.

In weiterer Ausgestaltung besteht die Bogenstufe aus Chrom oder einer Legierung oder Keramik mit überwiegend Chrom– bzw. Chromoxidgehalt. Dabei kann Chrom, die Chromoxidkeramik oder die Chromlegierung mittels Aufdampfens aber auch durch andere geeignete Verfahren aufgebracht werden. Beispielsweise kann auch eine Unterschicht oder die Magnetschicht selbst aus Chrom oder Chromoxid hergestellt werden.

Die mechanische Verschleißfestigkeit beispielsweise einer aufgedampften Chromstufe ist mit 3200 Starts ohne Verschleißerscheinungen ausreichend groß.

Für andere Anwendungsvarianten können auch folgende Anordnungen benutzt werden:

a) Mehrere Bogenstufen auf unterschiedlichen Kreisspuren.

b) wie a) jedoch auf verschiedenen Radien, die im Winkel zueinander versetzt angeordnet sind.

c) Mehrere Bogenstufen auf unterschiedlichen Kreisspuren und demselben Radius.

In praktischer Ausgestaltung sollte die Bogen‐länge mindestens dem Bogen entsprechen, der sich für den Winkel $\alpha_{min}$ durch die Beziehung $\alpha_{min}$ = $t_{min}$el • $2\pi f$ ergibt, worin $t_{min}$el, die Beruhi‐gungszeit der Meßanordnung und $2\pi f$ die Kreis‐frequenz der Plattendrehung ist, und wodurch ein‐deutig unterscheidbare Analogsignale im NF‐Be‐reich erhalten werden.

In weiterer Ausgestaltung sollte die Länge der Bogenstufe größer als der Bogen des Winkels von $\alpha_{min}$ = 18˚ und vorzugsweise größer als der Bo‐gen des Winkels $\alpha$ von 40˚, insbesondere bei etwa 60˚,gewählt werden.

Im weiteren betrifft die Erfindung ein Testsy‐stem mit dem erfindungsgemäßen Aufzeich‐nungsträger.

Das Testsystem mit einem Magnetaufzeich‐nungsträger zu Testzwecken zur Eichung von Flug‐Magnetköpfen mittels einer Meßelektronik, ist gekennzeichnet durch eine Mindestlänge der Kreisbogenformstufe, die durch den Winkel $\alpha_{min}$ = $t_{min}$el. • $\omega$ bestimmt ist, worin $t_{min}$el. die Beruhi‐gungszeit der Meßelektronik ist, nachdem der Ma‐gnetkopf an einer der scharfen Kanten der Kreis‐bogenstufe ein starkes Signal erzeugt hat, und "$\omega$" die Kreisfrequenz der Drehung des Aufzeich‐nungsträgers ist.

Dadurch wird vorteilhaft erreicht, daß eindeutig unterscheidbare Analogsignale im NF‐Bereich erhalten werden, die mittels Oszillograph darstell‐bar und daher meßtechnisch problemlos und schnell auswertbar sind.

Ausführungsbeispiele der Erfindung sind in der Zeichnung dargestellt und nachfolgend beschrie‐ben.

Figur 1     zeigt die Draufsicht und Seitenan‐sicht einer Platte mit Bogenstufen.

Figur 2     zeigt den geometrischen Verlauf der Beschleunigungsbewegung des Magnetkopfes über der erfindungs‐gemäßen Bogenstufe.

Figur 3     zeigt den zeitlichen Verlauf der Meßsignale beim Laden des Kopfes auf je einem konstanten Prüfradius der Magnetplatte über der Bogen‐stufe.

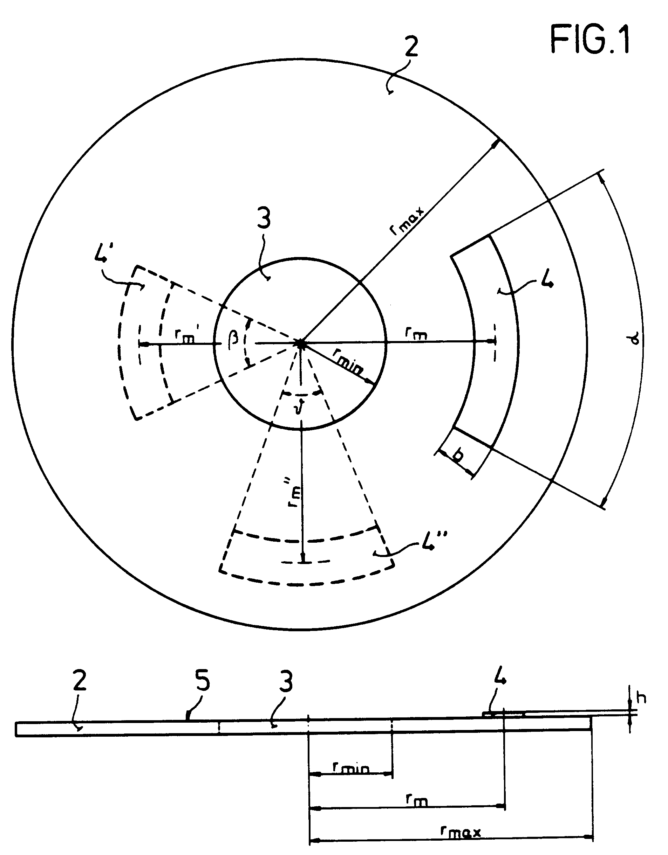

In Figur 1 ist eine Magnetplatte 2 von Kreis‐form und mit Aufnahmemittelöffnung 3 dargestellt, wobei der Aufzeichnungsbereich durch die Diffe‐renz der Radien $r_{max}$ − $r_{min}$ bestimmt ist. Etwa in der Mitte dieses Bereichs auf dem Radius $r_m$ ist eine Bogenstufe 4 vorgesehen. Vorzugsweise sollte die Bogenstufe 4 zur Mittelöffnung 3 hin versetzt angeordnet sein, so daß $r_m$ nicht der Mittelradius (entsprechend dem arithmetischen Mittel aus $r_{max}$ und $r_{min}$ gleich der halben Differenz $r_{max}$ − $r_{min}$) sein muß, aber kann.

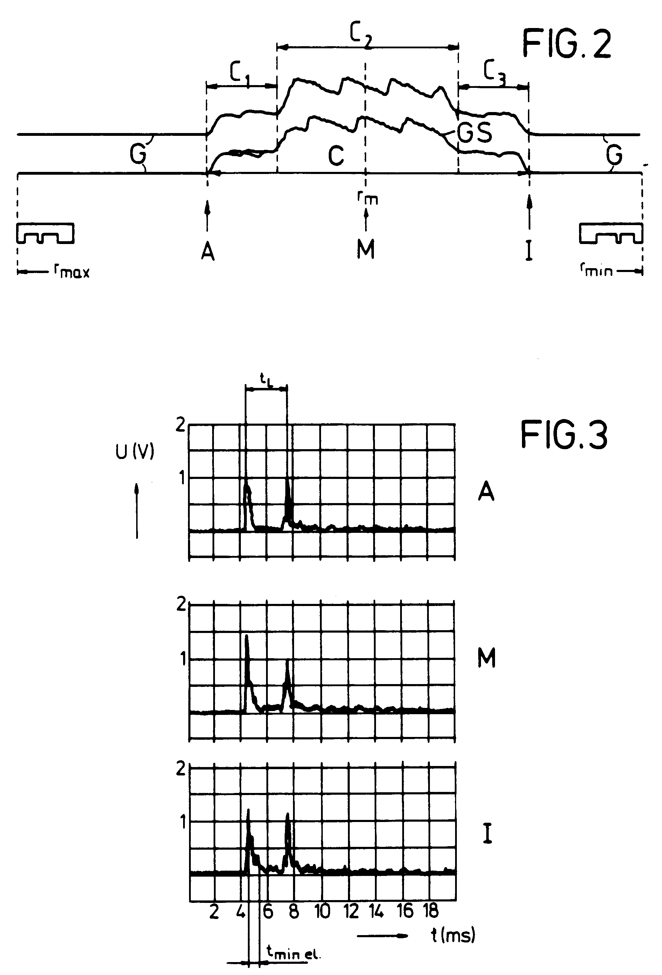

Die Länge l der Bogenstufe ist von der Meß‐elektronik her begrenzt, wobei die Mindestlänge unabhängig vom jeweiligen Plattendurchmesser durch den Mindestwinkel $\alpha_{min}$ = $t_{min}$el • $\omega$ (omega) = $t_{min}$el • $2\pi f$ bestimmt ist. $2\pi f$ ist darin die Kreisfrequenz, die sich auch aus der Drehzahl U/sec • 360˚ als Winkel direkt ergibt. Im Falle einer 5 1/4 Zoll‐Platte (130 mm Durchmesser) bei einer Drehzahl von 60 U/sec entspricht die Länge der Stufe gemäß Figur 3 mit $t_L$ = 2,8 ms der Bogenlänge eines etwa 60˚ Winkels, während die minimale Bogenlänge durch den Bogen des Min‐destwinkel $\alpha_{min}$ von etwa 17,2˚ gegeben ist (bei $t_{min}$el = 0,8 ms).

Dabei ist $t_{min}$el die Beruhigungszeit der Meß‐elektronik, die abläuft, nachdem die "starke Flan‐ke" einer der scharfkantigen Stufenenden der Bo‐genstufe 4 ein starkes Signal, (vgl. Figur 3), er‐zeugt hat. Die bei einer Umdrehung der Platte erzeugten zwei Spannungsspitzen werden, um Umgebungseinflüsse zu kompensieren über eine Zeit im Sekundenbereich, z.B. über 10 Plattenum‐drehungen mittels einer üblichen Integrierschaltung integriert, so daß ein Gleichspannungssignal ge‐mäß Figur 2 erhalten wird.

Die Höhe h der Bogenstufe soll unabhängig von anderen Plattenmaßen im Bereich von etwa 0,3 bis 0,7 $\mu$m, vorzugsweise zwischen 0,35 und 0,65 $\mu$m liegen, bei einer Nennflughöhe des Kopfes von 0,4 $\mu$m. Die Untergrenze (0,3 bzw. 0,35 $\mu$m) ist dabei bestimmt durch eine schlechte Auflösung des von der Stufe 4 erzeugten Meßsignals und das Grundrauschen der Aufzeichnungsschicht. Die Obergrenze (0,65 bzw. 0,7 $\mu$m) ist dabei gegeben durch die Hörbarkeitsgrenze des Testkopf‐Stufen‐Kontakts, d.h. der Kontakt soll nicht hörbar sein, damit eine möglichst lange Lebensdauer von Kopf und Platte erreicht wird.

Die radiale Ausdehnung (Breite) der Bogen‐stufe ist größer zu wählen als die "radiale Breite" des Flugkörpers des Kopfes, der schematisch in Figur 2 dargestellt ist. Der Kopf ist wie üblich mit einem Piezoelement versehen. Wenn sich Stufen‐ und Flugkörperbreite einander annähern, treten vermehrt Wippbewegungen des Kopfes auf, statt der gewünschten eindeutigen Aufstiegs‐ und Ab‐stiegsbewegung des Kopfes. Die Breite c der Bo‐genstufe wurde bei der 5 1/4 Zoll‐Platte (130 mm Durchmesser) zu 10 mm gewählt bei ca. 4 mm Kopfbreite b.

Die Bogenstufe 4 soll im allgemeinen aus einem Material größerer Härte als diejenige der Magnetschicht bestehen, z.B. aus Chrom oder einer Chrom – oder Chromoxidlegierung bzw. – Keramik. Allgemein ist es also vorteilhaft, ein Material aus der Gruppe enthaltend Chrom und Chromdioxid zu verwenden. Im praktischen Beispiel wurde die Bogenstufe durch Aufdampfen von metallischem Chrom hergestellt, wodurch eine gute Scharfkantigkeit der Stufenenden erreicht wird. Es sind allerdings auch andere geeignete und ähnliche harte Materialien verwendbar, ohne daß die Vorteile der Erfindung verloren gehen. Für eine optimales Signal/Rausch – Verhältnis werden möglichst senkrechte und geradlinige kantige Enden in Querrichtung der Stufe 4 (Radialrichtung der Platte) angestrebt, die durch besagtes Aufdampfen in Verbindung mit einer geeigneten Kontakt – Maske vorteilhaft realisierbar sind. Für die saubere Trennung der Meßsignale, die von den scharfkantigen Stufenenden erzeugt worden sind, ohne daß zu großer elektronischer Aufwand für die Signaltrennung notwendig ist, ist ein ausreichender Abstand zwischen dem Stufenvorderende zum Stufenhinterende, also eine ausreichende Stufenlänge erforderlich.

Die beschriebene Bogenstufe 4 wurde optimiert für maximale Beschleunigungswerte an den Stufenkanten und für optimale Haftung der Stufe 4 in bezug auf die Magnetplatte.

Beim Testvorgang startet und landet der Testkopf zur Schonung der Bogenstufe 4 außerhalb letzterer und wird im Flug über der Bogenstufe positioniert. Beim Passieren der Vorder – und Hinterenden der Bogenstufe erfährt der Gleittestkopf vertikale Beschleunigungsstöße, die über der Geometrie der Platte und der Bogenstufe 4 in Figur 2 dargestellt sind.

Figur 2 zeigt einen doppelten Verlauf des gleichgerichteten Meßsignals, der von zwei aufeinanderfolgenden Messungen derselben Kopf – Plattenanordnung herrührt, um die Wiederholbarkeit der Messung kontrollieren zu können.

Rechts und links des Beschleunigungssignal – "Gebirges" sind ungestörte Grundrauschsignale G vorhanden, die von der Magnet – Oxidschicht der Platte erzeugt werden und die als Referenzwerte gemessen und zur Empfindlichkeitseinstellungder Meßapparatur benutzt werden. Es ergibt sich über die Stufenbreite c vom Außenrand A über die Mitte M bis zum Innenrand I ein bewertetes Beschleunigungssignal GS, das stufenförmig anwächst, im Mittelteil einige sägezahnförmige Spitzen aufweist und dann wieder stufenförmig (etwa dem Beginn entsprechend) abfällt. Im einzelnen also die Bereiche $C_1$ und $C_3$, in denen der Kopf sich noch nicht oder nicht mehr vollständig über der Stufe befindet, und der Bereich $C_2$, in dem der Kopf vollständig über der Stufe schwebt.

Der Flugkörper F ist in den extremen Außen – und Innenlagen der Platte dargestellt.

Die Einzelsignale der Kopfbeschleunigungen, die in den geometrischen äußeren (A), mittleren (M) und inneren Bereichen (I) der Bogenstufe erzeugt sind, werden über eine Meßanordnung als Meßsignale erzeugt und sind in Figuren 3A, 3M, und 3I dargestellt.

Der jeweils dargestellte Signalverlauf ist das Ausgangssignal der Meßanordnung, die im wesentlichen aus einem ladungsempfindlichen Verstärker, hier einem Oszillograph, und einem Filter zum Selektieren des NF – Signals im Bereich von ca. 1 – 20 kHz, besteht. Die Meßsignale der Figuren 3A, 3M und 3I sind daher Oszillographen – Bilder. Es ergibt sich jeweils eine Spannungsspitze an dem Vorderende, ein Spannungsabfall bis zur Zeit $t_{min}$el von hier etwa 0,8 ms, eine erneute Spannungspitze an dem Hinterende mit etwa demselben Spannungsabfall in der Zeit $t_{min}$el sowie ein Zeitabstand zwischen den Spannungsspitzen von $t_L \approx 2,8$ ms, was einer Bogenlänge eines Winkel von ca. 60˚ entspricht.

In Figur 1 sind in der Draufsicht weitere Bogenstufen 4' und 4'' dargestellt, die hier auf winkelmäßig verschiedenen Radien der Platte liegen und unterschiedliche Radialabstände $r_m'$ bzw. $r_m''$ vom Mittelpunkt der Platte 2 aufweisen. Die Bogenlängen entsprechen verschiedenen Winkeln $\beta$ = 40˚ und $\vartheta$ = 50˚, – entsprechend Zeiten $t_L$ von 1,85 bzw. 2,3 ms. Es sind sowohl Kombinationen unterschiedlicher Bogenstufen 4, 4', 4'' mit verschiedenen Lagen, Bogenlägen, Breiten und Höhen im Rahmen der gegebenen Vorschriften s.o. möglich als auch Kombinationen auf demselben Radius oder Durchmesser mit gleichen Bogenlängen, Breiten und Höhen, je nach dem angestrebten Prüf – oder Meßziel.

Die Erfindung ermöglicht die Erzeugung von etwa senkrecht scharfen und relativ geradlinigen Beschleunigungssignalen, die durch eine wirtschaftlich herstellbare Meßaufzeichnungsplatte erzeugbar sind und meßtechnisch wirtschaftlich als NF – Signal auswertbar sind. Die Meßplatten haben sich in der Praxis bei der Kopfprüfung, sowie in der Prüfung von Plattenlaufwerken sowie Platten bei Kopfwechseln hervorragend bewährt.

**Patentansprüche**

1. Aufzeichnungsträger (2) zu Testzwecken zur Eichung von Flug – Magnetköpfen mittels einer Meßelektronik, bestehend aus einem nicht flexiblen Substrat, wobei zumindest eine stufenförmige Erhebung (4) im Aufzeichnungsbereich des Aufzeichnungsträger vorgesehen ist und die stufenförmige Erhebung aus hartem Material besteht, dadurch gekennzeichnet, daß
- wenigstens eine Magnetschicht aufge – bracht ist,
- die stufenförmige Erhebung (4) eine Kreisbogenformstufe ist und auf der Magnetschichtfläche vorgesehen ist,
- die Enden der stufenförmigen Erhebung (4) radial angeordnet und senkrecht zur Drehrichtung des Aufzeichnungsträgers (2) scharfkantig ausgebildet sind
- die stufenförmige Erhebung eine Höhe im Bereich von 0,30 – 0,70 $\mu$m besitzt.

2. Aufzeichnungsträger nach Anspruch 1, da – durch gekennzeichnet, daß derselbe eine Fest – Magnetplatte ist.

3. Aufzeichnungsträger nach Anspruch 1 oder 2, dadurch gekennzeichnet, daß die stufenförmi – ge Erhebung (4) etwa in der Mitte des Auf – zeichnungsbereichs (rm), vorzugsweise zur Mitte (3) des Aufzeichnungsträgers (2) hin versetzt angeordnet ist.

4. Aufzeichnungsträger nach einem oder mehre – ren der Ansprüche 1 bis 3, dadurch gekenn – zeichnet, daß die stufenförmige Erhebung (4) aus Chrom oder einer Legierung mit überwie – gend Chrom oder einer Keramik mit überwie – gend Chromoxidgehalt besteht.

5. Aufzeichnungsträger nach einem oder mehre – ren der Ansprüche 1 bis 4, dadurch gekenn – zeichnet, daß mehrere stufenförmige Erhe – bungen (4, 4', 4'') auf winkelmäßig unter – schiedlichen Radien (rm bzw. rm' bzw. rm'') vorgesehen sind.

6. Aufzeichnungsträger nach einem oder mehre – ren der Ansprüche 1 bis 4, dadurch gekenn – zeichnet, daß mehrere stufenförmige Erhe – bungen (4, 4', 4'') auf unterschiedlichen Kreisspuren jedoch winkelmäßig verschiede – nen Radien (rm bzw. rm' bzw. rm'') vorgese – hen sind.

7. Aufzeichnungsträger nach einem oder mehre – ren der Ansprüche 1 bis 4, dadurch gekenn – zeichnet, daß mehrere stufenförmige Erhe – bungen auf unterschiedlichen Kreisspuren und winkelmäßig auf demselben Radius vorgese – hen sind.

8. Aufzeichnungsträger nach einem oder mehre – ren der Ansprüche 1 bis 7, dadurch gekenn – zeichnet, daß die Länge der stufenförmigen Erhebung größer als der Bogen des Winkels von $\alpha_{min}$ = 18˚ ist und vorzugsweise größer als der eines Winkels von $\alpha$ = 40˚ ist.

9. Aufzeichnungsträger nach Anspruch 8, da – durch gekennzeichnet, daß die Länge der stufenförmigen Erhebung etwa dem Bogen eines Winkels $\alpha$ von 60˚ entspricht.

10. Aufzeichnungsträger nach Anspruch 1 oder 4 und einem oder mehreren der Ansprüche 2, 3 und 5 bis 9, dadurch gekennzeichnet, daß die scharfkantige Enden der stufenförmigen Er – hebung durch Aufdampfen eines harten Ma – terials, insbesondere Chrom oder Chromdioxid hergestellt sind.

11. Testsystem mit einem Magnetaufzeichnungs – träger (2) zu Testzwecken nach einem der Ansprüche 1 – 10, zur Eichung von Flug – Ma – gnetköpfen mittels einer Meßelektronik, da – durch gekennzeichnet, daß die Kreisbogen – formstufe eine Mindestlänge aufweist, die durch den Winkel $\alpha_{min}$ = t min el $\cdot$ $\omega$ be – stimmt ist, worin t min el die Beruhigungszeit der Meßelektronik ist, nachdem der Magnet – kopf an einer der scharfen Kanten der Kreis – bogenstufe ein starkes Signal erzeugt hat, und "$\omega$" die Kreisfrequenz der Drehung des Auf – zeichnungsträgers ist.

**Claims**

1. A recording medium (2) for test purposes, in particular for calibrating flying heads by means of measurement electronics, consisting of a nonflexible substrate, at least one step – like projection (4) being provided in the recording region of the recording medium and the step – like projection consisting of hard material, wherein
at least one magnetic layer is applied,
the step – like projection (4) is an arc – shaped step and is provided on the magnetic layer surface,
the ends of the step – like projection (4) are arranged radially and are formed at right an – gles to the direction of rotation of the recording medium (2) and have sharp edges and
the step – like projection has a height of 0.30 – 0.70 $\mu$m.

2. A recording medium as claimed in claim 1, which is a hard disk.

3. A recording medium as claimed in claim 1 or 2, wherein the step – like projection (4) is ar – ranged roughly in the middle of the recording region (rm), preferably displaced toward the middle (3) of the recording medium (2).

4. A recording medium as claimed in one or more of claims 1 to 3, wherein the step−like projection (4) consists of chromium or of an alloy containing predominantly chromium or of a ceramic containing predominantly chromium oxide.

5. A recording medium as claimed in one or more of claims 1 to 4, wherein a plurality of step−like projections (4, 4', 4'') are provided on radii at different angles (rm or rm' or rm'').

6. A recording medium as claimed in one or more of claims 1 to 4, wherein the plurality of step−like projections (4, 4', 4'') are provided on different circular tracks but on radii at different angles (rm or rm' or rm'').

7. A recording medium as claimed in one or more of claims 1 to 4, wherein the plurality of step−like projections are provided on different circular tracks and along the same radius in terms of angle.

8. A recording medium as claimed in one or more of claims 1 to 7, wherein the length of the step−like projection is greater than the arc of the angle $\alpha_{min} = 18°$ and is preferably greater than the arc of an angle $\alpha = 40°$.

9. A recording medium as claimed in claim 8, wherein the length of the step−like projection roughly corresponds to the arc of an angle $\alpha$ of 60°.

10. A recording medium as claimed in claim 1 or 2, and one or more of claims 2, 3 and 5 to 9, wherein the sharp−edged ends of the step−like projection are used by vapor deposition of a hard material, in particular chromium or chromium dioxide.

11. A test system having a magnetic recording medium (2) for test purposes as claimed in any of claims 1−10, for calibrating flying heads by means of measurement electronics, wherein the arc−shaped step has a minimum length which is determined by the angle $\alpha$ min = t min el • $\omega$, where t min el is the settling time of the measurement electronics after the head has generated a strong signal at one of the sharp edges of the arc−shaped step, and $\omega$ is the angular frequency of the rotation of the recording medium.

**Revendications**

1. Support d'enregistrement (2) pour essais d'étalonnage de têtes magnétiques volantes au moyen d'un dispositif électronique de mesure, constitué d'un substrat non souple, au moins une élévation en forme de gradin (4) étant prévue dans la zone d'enregistrement du support d'enregistrement et cette élévation étant en matière dure, caractérisé par le fait que
   - au moins une couche magnétique est appliquée,
   - l'élévation en forme de gradin (4) est un gradin en arc de cercle et est prévue sur la surface de la couche magnétique,
   - les extrémités de l'élévation en forme de gradin (4) sont dirigées radialement et à arêtes vives perpendiculairement à la direction du support d'enregistrement (2),
   - l'élévation en forme de gradin a une hauteur comprise entre 0,30 et 0,70 $\mu$m.

2. Support d'enregistrement selon la revendication 1, caractérisé par le fait que c'est un disque magnétique dur.

3. Support d'enregistrement selon l'une des revendications 1 et 2, caractérisé par le fait que l'élévation en forme de gradin (4) est placée à peu près au milieu de la zone d'enregistrement ($r_m$), de préférence en déport vers le milieu (3) du support d'enregistrement (2).

4. Support d'enregistrement selon une ou plusieurs des revendications 1 à 3, caractérisé par le fait que l'élévation en forme de gradin (4) est constituée de chrome ou d'un alliage composé en majorité de chrome ou d'une céramique composée en majorité d'oxyde de chrome.

5. Support d'enregistrement selon une ou plusieurs des revendications 1 à 4, caractérisé par le fait que plusieurs élévations en forme de gradin (4, 4', 4'') sont prévues sur des rayons différents ($r_m$, $r_m$', $r_m$'').

6. Support d'enregistrement selon une ou plusieurs des revendications 1 à 4, caractérisé par le fait que plusieurs élévations en forme de gradin (4, 4', 4'') sont prévues sur des pistes circulaires différentes de différents rayons ($r_m$, $r_m$', $r_m$'').

7. Support d'enregistrement selon une ou plusieurs des revendications 1 à 4, caractérisé par le fait que plusieurs élévations en forme de gradin sont prévues sur des pistes circulaires différentes mais de même rayon.

8.  Support d'enregistrement selon une ou plusieurs des revendications 1 à 7, caractérisé par le fait que la longueur de l'élévation en forme de gradin est supérieure à l'arc de l'angle $alpha_{min}$ = 18 degrés et de préférence supérieure à celui d'un angle alpha = 40 degrés.

9.  Support d'enregistrement selon la revendications 8, caractérisé par le fait que la longueur de l'élévation en forme de gradin correspond à peu près à l'arc d'un angle alpha de 60 degrés.

10. Support d'enregistrement selon l'une des revendications 1 et 4 et une ou plusieurs des revendications 2, 3 et 5 à 9, caractérisé par le fait que les extrémités à arêtes vives de l'élévation en forme de gradin sont produites par dépôt par évaporation sous vide d'une matière dure, en particulier de chrome ou de dioxyde de chrome.

11. Système d'essais avec un support magnétique d'enregistrement (2) pour essais selon l'une des revendications 1 à 10, pour l'étalonnage de têtes magnétiques volantes au moyen d'un dispositif électronique de mesure, caractérisé par le fait que le gradin en arc de cercle a une longueur minimale qui est déterminée par l'angle $alpha_{min}$ = $t_{min}$ el·gamma, $t_{min}$ el étant le temps de stabilisation du dispositif électronique de mesure après que la tête magnétique a produit un signal puissant sur une des arêtes vives du gradin en arc de cercle, et gamma étant la pulsation de rotation du support d'enregistrement.

FIG.1

FIG.2

FIG.3